# EUROPEAN PATENT APPLICATION

(11) **EP 1 274 223 A1**
(43) Date of publication of application: **08.01.2003**
(21) Application number: 01202625.8
(22) Date of filing: 06.07.2001
(51) Int. Cl.: H04M 19/08, H04M 1/02, H01L 31/042, H01L 31/048, H01L 31/058

(54) **Built-in solar cells for mobile phone terminals**

(71) Applicant: Mokhtari, Hatem, 1081 Bruxelles (BE)
(72) Inventor: Mokhtari, Hatem, 1081 Bruxelles (BE)

(57) **Abstract**

Nowadays mobile phones have become widespread over the entire globe, where users can make calls, send short messages and even browse the internet using UMTS. There is a clear market need in continuously improving their design and versatility. GSM system for example is designed to cope with the customer requirements in terms of battery consumption from one hand and quality of service from the other hand. With the forthcoming emerging technologies such as GPRS and UMTS the users will need more and more battery life due to the continuous data transmission over the Air Interface. In fact Data terminals will require a full power usage unlike in speech applications where DTX or Discontinuous Transmission is normally implemented in all Mobile Speech Systems. Moreover with the UMTS terminals users might use video conferencing facilities, which will be more critical for battery consumption because not only of Data transiting Uplinks and Downlinks but of LCD Screens consumption as well. With this built-in solar cell system, Mobile Phone Users will be able to charge their battery phones almost everywhere there is sufficient light : in trains, airplanes, on the beach in mountains, in shopping malls, etc.

## Description

### 1. Introduction

Nowadays mobile phones have become widespread over the entire globe, where users can make calls, send short messages and even browse the internet using UMTS. There is a clear market need in continuously improving their design and versatility. GSM system for example is designed to cope with the customer requirements in terms of battery consumption from one hand and quality of service from the other hand. With the forthcoming emerging technologies such as GPRS and UMTS the users will need more and more battery life due to the continuous data transmission over the Air Interface. In fact Data terminals will require a full power usage unlike in speech applications where DTX or Discontinuous Transmission is normally implemented in all Mobile Speech Systems. Moreover with the UMTS terminals users might use video conferencing facilities, which will be more critical for battery consumption because not only of Data transiting Uplinks and Downlinks but of LCD Screens consumption as well.

Solar cells have been extensively used for numerous applications and are nowadays available at very low costs. The advantage of such systems is as follows :
- Reduced Cost
- Installation ease
- Available DC Power during daylight
- No major visual pollution
- Compact Size depending on power requirement
- No negative effect on the Environment
- No Side-effect on Health

Such a system when built-in a Mobile phone should yield an additional power supply especially when the users do not have a DC Power supply end such as in cars or office/residential AC power supply end. With a solar cells (or solar cells) the Mobile users can profit from its features almost anywhere there is light such as the case for calculators.

### 2. System Description

Solar Cells are generally light weight and can easily be designed as thin layers installed on a mobile phone terminal connected to the Ni-Ion Battery. In terms of power consumption the Mobile phones need 3.6 V and a current of 650 mA, which leads to a power consumption of 2.34 mW DC power. Manufacturers may propose different design features:

### A. Multiple Small Solar Cells

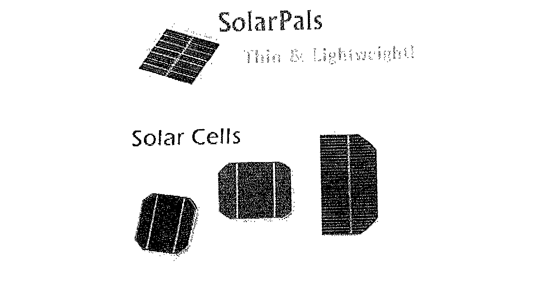

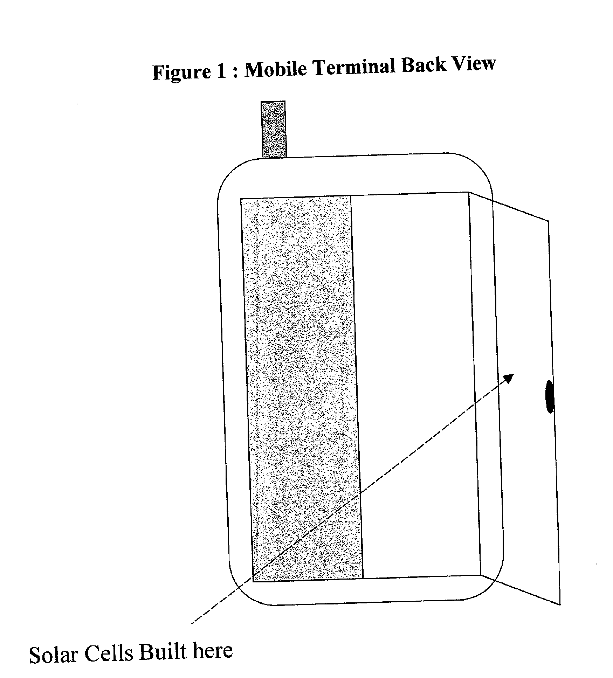

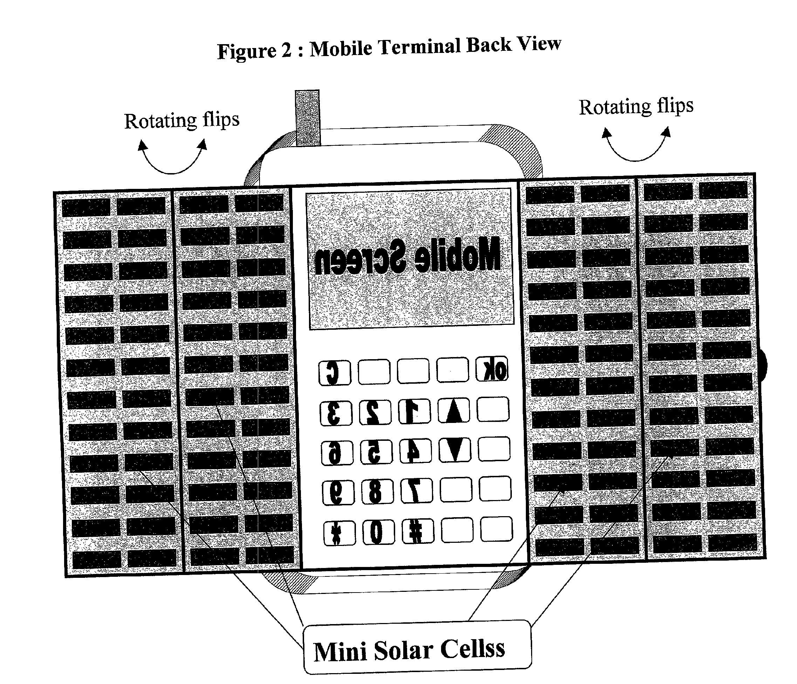

Multiple Small Solar Cells can be designed by the manufacturer so that the user can deploy them when needed using a mechanical movement on a button placed on the back side of the terminal as shown in figure 1 and figure 2. The advantages of such a solution are summarized as follows:
*i) Larger Exposure surface than the Unique Solar case and therefore faster charging*
*ii) Users can still use the Terminal while it is charging. Manufacturers will be able to design a double-folding (180 degrees) solar cells that brings the Solar cells towards the user's face, and therefore charging takes place simultaneously when the user is using the Mobile phone.*

However, this solution has the disadvantage that no charging can be made possible while the user is using the Terminal (Mobile Phone) for Speech unless another solution is envisaged.

### B. Unique Large Solar Cells

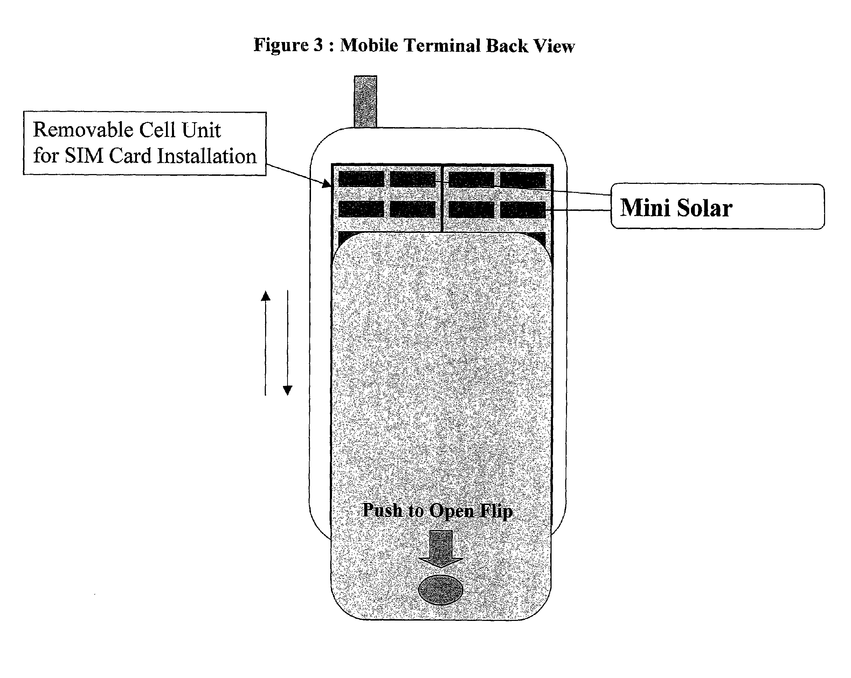

The Unique Solar Cells that occupies 90% of the surface of the Mobile back side as shown in figure 3

*The advantage is that the user will not have to deploy the cells, only a sort of slipping clip has to be squeezed to expose the cells to the light for charging, and closing it when not needed especially for protection against mechanical shocks.*

### 3. System Features and Advantages

The advantages of a Built-in Solar (or Photovoltaic) Cells are numerous and can be summarized as follows:
i) Data Terminals will make an intensive use of the DC power resource as no Discontinuous Transmission (DTX) will be used such as for Speech where the users are alternatively speaking. This should be more and more critical when UMTS will be used : Video Conferencing, WWW Browsing, High Speed Data, etc. Power consumption of the LCD screen and built-in cameras will be a real issue.
ii) The Mobile market growth will dictate the competetivity of the designers to be more and more innovative offering optimum solutions such as battery consumption. Solar cells will be a good solution for Mobile users using high-speed data especially complex modulation and coding schemes are already expected on these high-speed data terminals.
iii) When there is no DC power supply such as in cars the users can just use the available surrounding light (sun, lamps, or any other light source). People on holidays for example will enjoy the Solar cells without worrying of the charger to be carried with them and looking for a DC power socket. The system can be used in trains, airplanes, in mountains, on the beach, or in any other location where no power is available; just as scientific calculators.
iv) Low cost for the mobiles' vendors as Solar Cells are nowadays affordable at competitive prices. Some references are included in the section 5 where are given by different solar cells designers using different shapes and power supply features. Mobile phone designers will be able to design the solar cells (or solar mini-cells) to fit in the general design.
v) No EMC Hazard problem nor even any other known side effect on health.

### 4. Conclusion

This is a new application of Solar Energy Supply using photo-voltaic cells built-in Mobile Phones Terminals. In terms of feasibility we foresee a positive reaction of both the manufacturers and the users especially because of the expected massive demand on high-speed data applications. Moreover Solar energy is a free and available resource that everyone can use and especially with no side effect on human being health. If no solar energy is available such during the night users can still charge their Mobile Terminals using any other light source as mentioned above.

### 6. References

There exist plenty of Solar Cells manufacturers proposing different solar cells of different sizes and shapes. We can refer to the following Web sites :
www.siliconsolar.com
www.solarcellslimited.com,
www.pvsolmecs.com,
www.plastecs.com,

## Claims

1. Built-in a Mobile Phone Terminal ; no need to transport it in a separate box

2. Available DC power everywhere there is sufficient light source

3. No EMC Problems expected

4. No Health and Safety issues expected

5. Low Implementation and Manufacturing Cost and therefore reasonable Marketing Prices

6. Known Technology but this application will lead to more competition
